(19) Europäisches Patentamt
European Patent Office
Office européen des brevets

(11) **EP 2 444 792 B1**

(12) **EUROPÄISCHE PATENTSCHRIFT**

(45) Veröffentlichungstag und Bekanntmachung des
Hinweises auf die Patenterteilung:
**10.10.2018 Patentblatt 2018/41**

(51) Int Cl.:
*G01N 21/64* *(2006.01)*     *G02B 21/16* *(2006.01)*
*G02B 21/36* *(2006.01)*     *G02B 27/58* *(2006.01)*

(21) Anmeldenummer: **11185708.2**

(22) Anmeldetag: **19.10.2011**

(54) **Verfahren und Einrichtung zur mikroskopischen Bildaufnahme einer Probenstruktur**

Method and device for microscope imaging of a structure of a sample

Procédé et dispositif destinés à l'enregistrement d'une image microscopique d'une structure d'un échantillon

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **19.10.2010 DE 102010038265
04.03.2011 DE 102011001091**

(43) Veröffentlichungstag der Anmeldung:
**25.04.2012 Patentblatt 2012/17**

(73) Patentinhaber: **Leica Microsystems CMS GmbH
35578 Wetzlar (DE)**

(72) Erfinder: **Dr. Fölling, Jonas
69115 Heidelberg (DE)**

(74) Vertreter: **Schaumburg und Partner
Patentanwälte mbB
Postfach 86 07 48
81634 München (DE)**

(56) Entgegenhaltungen:
**DE-A1-102008 059 328     DE-B3-102006 021 317**

• **GEORGE H PATTERSON ET AL: "DEVELOPING
PHOTOACTIVATED LOCALIZATION
MICROSCOPY (PALM)", BIOMEDICAL IMAGING:
FROM NANO TO MACRO, 2007. ISBI 2007. 4TH
IEEE INTE RNATIONAL SYMPOSIUM ON, IEEE,
PI, 1. April 2007 (2007-04-01), Seiten 940-943,
XP031084430, ISBN: 978-1-4244-0671-5**

**Beschreibung**

Die Erfindung betrifft ein Verfahren und eine Einrichtung zur mikroskopischen Bildaufnahme einer Probenstruktur nach dem Oberbegriff des Anspruchs 1 bzw. 10.

In jüngerer Vergangenheit wurden lichtmikroskopische Abbildungsverfahren entwickelt, mit denen sich basierend auf einer sequentiellen, stochastischen Lokalisierung von einzelnen Markern, insbesondere Fluoreszenzmolekülen, Probenstrukturen darstellen lassen, die kleiner sind als die beugungsbedingte Auflösungsgrenze klassischer Lichtmikroskope. Solche Verfahren sind bei-spielsweise beschrieben in WO 2006/127692 A2; DE 10 2006 021317 B3; WO 2007/128434 A1, US 2009/0134342 A1; DE 10 2008 024 568 A1; "Sub-diffraction-limit imaging by stochastic optical reconstruction microscopy (STORM)", Nature Methods 3, 793-796 (2006), M. J. Rust, M. Bates, X. Zhuang; "Resolution of Lambda/10 in fluorescence microscopy using fast single molecule photo-switching", Geisler C. et al, Appl. Phys. A, 88, 223-226 (2007). Dieser neue Zweig der Mikroskopie wird auch als Lokalisierungsmikroskopie bezeichnet. Die angewandten Verfahren sind in der Literatur z.B. unter den Bezeichnungen (F)PALM ((Fluorescence) Photoactivation Localization Microscopy), PALMIRA (PALM with Independently Running Acquisition), GSD(IM) (Ground State Depletion Individual Molecule return) Microscopy) oder (F)STORM ((Fluorescence) Stochastic Optical Reconstruction Microscopy) bekannt.

Den neuen Verfahren ist gemein, dass die abzubildenden Probenstrukturen mit Markern präpariert werden, die über zwei unterscheidbare Zustände verfügen, nämlich einen "hellen" Zustand und einen "dunklen" Zustand. Werden beispielsweise Fluoreszenzfarbstoffe als Marker verwendet, so ist der helle Zustand ein fluoreszenzfähiger Zustand und der dunkle Zustand ein nicht fluoreszenzfähiger Zustand. Zur Abbildung von Probenstrukturen mit einer Auflösung, die höher als die klassische Auflösungsgrenze der bildgebenden Optik ist, wird nun wiederholt eine kleine Teilmenge der Marker in den hellen Zustand überführt. Diese Teilmenge wird im Folgenden als aktive Teilmenge bezeichnet. Dabei ist die Dichte der die "aktive" Teilmenge bildenden Marker so zu wählen, dass der mittlere Abstand benachbarter Marker im hellen und damit lichtmikroskopisch abbildbaren Zustand größer als die Auflösungsgrenze der bildgebenden Optik ist. Die die aktive Teilmenge bildenden Marker werden auf eine räumlich auflösende Anordnung von Sensorelementen abgebildet, so dass von jedem Marker eine Lichtverteilung in Form eines Lichtflecks erfasst wird, dessen Größe durch die Auflösungsgrenze der Optik bestimmt ist.

Ist die Dichte der in der aktiven Teilmenge enthaltenen Marker so gering, dass der mittlere Abstand der Marker, wie vorstehend erläutert, einen durch die Auflösungsgrenze der lichtmikroskopischen Abbildung vorbestimmten Minimalabstand übersteigt, so liegt ein gewünschter Aktivierungszustand vor. Dieser Aktivierungszustand gewährleistet, dass jeder der von der Sensorelementanordnung erfasste Lichtfleck von genau einem aktivierten Marker stammt.

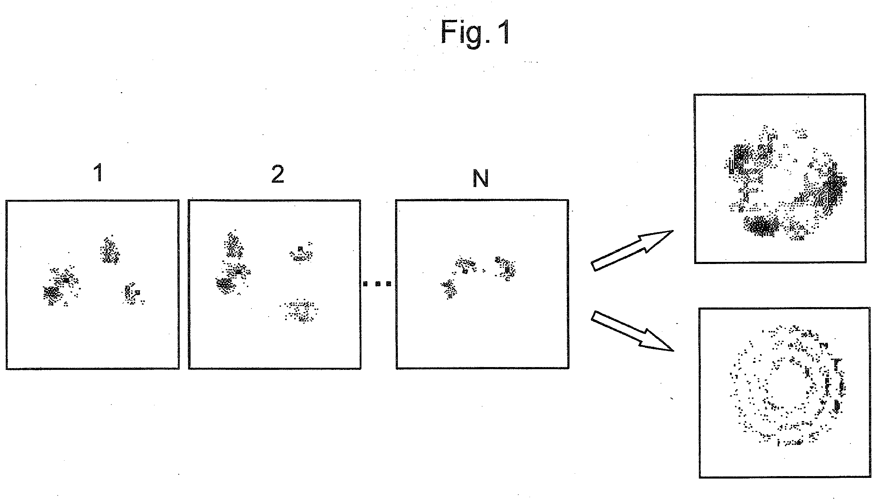

Das vorstehend erläuterte Verfahren ist in Figur 1 veranschaulicht. Im linken Teil der Figur 1 ist eine Sequenz von Rohdaten-Einzelbildern dargestellt, die mit 1,..., N durchnummeriert sind. Die in diesen Rohdaten-Einzelbildern dargestellten Lichtflecke stammen jeweils von einer aktiven Marker-Teilmenge, die sich in dem gewünschten Aktivierungszustand befindet, d.h. deren Markerdichte so gering ist, dass sichergestellt ist, dass der mittlere Abstand der Marker größer als der durch die Auflösungsgrenze der lichtmikroskopischen Abbildung vorbestimmte Minimalabstand ist.

Im oberen rechten Teil der Figur 1 ist ein Gesamtbild dargestellt, das sich aus der Überlagerung der Rohdaten-Einzelbilder 1,... , N ergibt. Dieses Gesamtbild weist eine verwaschene, räumlich nicht aufgelöste Lichtverteilung auf, die die abzubildende Probenstruktur nicht im Detail wiedergibt.

Im unteren linken Teil der Figur 1 ist ein Gesamtbild dargestellt, dass sich aus der Überlagerung von aus den Rohdaten-Einzelbildern ermittelten Schwerpunkten der Lichtverteilungen ergibt. Dieses Gesamtbild weist eine deutlich höhere Auflösung auf, so dass die Probenstruktur im Detail - im vorliegenden Beispiel mit ihren drei konzentrischen Kreisringen - gut zu erkennen ist.

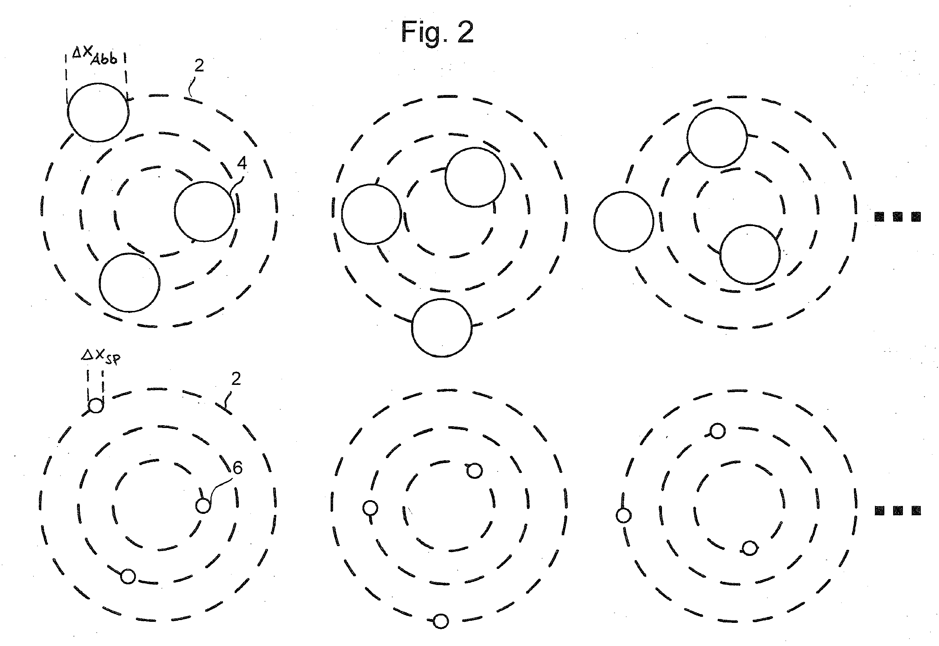

Zur Quantifizierung der Lokalisierungspräzision, die bei dem oben erläuterten Verfahren zu erzielen ist, wird auf Figur 2 verwiesen, in welcher der in Figur 1 gezeigte Sachverhalt nochmals rein schematisch veranschaulicht ist. Im oberen Teil der Figur 2 ist eine Sequenz von Rohdaten-Einzelbildern gezeigt. Die abzubildende, aus konzentrischen Kreisringen bestehende Probenstruktur ist in Figur 2 mit gestrichelten Linien angedeutet und mit dem Bezugszeichen 2 bezeichnet.

Die einzelnen Marker der aktiven Teilmenge erzeugen Lichtverteilungen 4, deren Größe durch das Auflösungsvermögen der abbildenden Optik gegeben und in Figur 2 mit $\Delta x_{Abb}$ gekennzeichnet ist. Wie in der Figur 2 schematisch dargestellt, haben die Marker einen mittleren Abstand voneinander, der kleiner als die Größe $\Delta x_{Abb}$ ist, so dass sich die Lichtverteilungen 4 nicht überlappen.

Im unteren Teil der Figur 2 sind Lichtverteilungen 6 gezeigt, die aus den Lichtverteilungen 4 durch die Schwerpunktsbestimmung hervorgehen. Die erzielbare Lokalisierungspräzision ist durch die Größe $\Delta x_{SP}$ der Lichtverteilungen 6 gegeben. Für die Lokalisierungsprä-zision $\Delta x_{SP}$ gilt:

$$\Delta x_{SP}\, \alpha\, \frac{\Delta x_{Abb}}{\sqrt{n}}$$

worin n die Zahl der je Lichtverteilung 4 detektierten Photonen angibt. Die Lokalisierungspräzision $\Delta x_{SP}$ liegt typischerweise in einem Bereich von etwa 10 bis 50nm.

Vor Aufnahme eines Rohdaten-Einzelbildes ist der vorstehend erläuterte Aktivierungszustand herzustellen. Ausgehend von welchem Anfangszustand dieser Aktivierungszustand eingestellt wird, ist von Methode zu Methode verschieden. Grundsätzlich sind zwei Methoden zu unterscheiden, nämlich eine als "bottom-up" und eine als "top-down" bezeichnete Methode. Bei der bottom-up-Methode befinden sich zunächst sämtliche Marker in ihrem dunklen Zustand. Die zur hochauflösenden Lokalisierung erforderliche Erzeugung der aktiven Marker-Teilmenge wird durch eine entsprechende Aktivierung, z.B. durch Einstrahlung von Aktivierungslicht bewirkt. Dies ist beispielsweise für das (F)PALM-Verfahren der Fall. Dagegen befinden sich bei der top-down-Methode zunächst sämtliche Marker in ihrem hellen, d.h. lichtmikroskopisch abbildbaren Zustand. Zur Erzeugung der aktiven Marker-Teilmenge werden dann die Marker zum großen Teil in ihren dunklen Zustand überführt, beispielsweise wiederum durch Einstrahlen von Licht. Hierbei können die Marker sogenannte "schaltbare" Marker sein, z.B. schaltbare Proteine. Auch können diese Marker beispielsweise bestimmte, konventionelle Fluoreszenzfarbstoffe sein, die durch Einstrahlen von Anregungslicht in langlebige Dunkelzustände übergehen, z.B. Triplettzustände (und damit im eigentlichen Sinne nicht-schaltbare Marker sind). In dieser Weise wird z.B. bei den GSD(IM)-Verfahren gearbeitet.

Sowohl bei der bottom-up-Methode als auch bei der top-down-Methode ist es vergleichsweise schwierig, den vorbestimmten Aktivierungszustand, der die hochauflösende Lokalisierung der einzelnen Marker erst ermöglicht, in reproduzierbarer Weise einzustellen. Insbesondere ist es bisher nicht möglich, in einfacher Weise festzustellen, ob dieser vorbestimmte Aktivierungszustand vorliegt oder nicht. So kommt es häufig vor, dass sich zu viele der Marker in ihrem hellen Zustand befinden, so dass die durch die Marker erzeugten Lichtverteilungen in den Rohdaten-Einzelbildern nicht räumlich voneinander getrennt sind. Dies erschwert die lichtmikroskopische Abbildung der Probenstruktur, insbesondere die Entscheidung, wann mit der eigentlichen Messung begonnen werden kann, d.h. wann tatsächlich nur noch so wenige Marker im hellen Zustand vorliegen, dass die durch die Marker erzeugten Lichtverteilungen mit ausreichend hoher Wahrscheinlichkeit eine räumliche Verteilung aufweisen, die eine getrennte Detektion der Lichtverteilungen ermöglicht.

Aus der DE 10 2008 059 328 A1 ist ein Verfahren zur PAL-Mikroskopie beschrieben, bei dem eine Probenstruktur mit Markern präpariert wird, die in einen lichtmikroskopisch abbildbaren Zustand überführbar sind, eine aktive Marker-Teilmenge erzeugt wird, in dem ein Teil der Marker in den lichtmikroskopisch abbildbaren Zustand überführt wird, und bei Vorliegen eines vorbestimmten Aktivierungszustands, in dem die in der aktiven Marker-Teilmenge enthaltenen Marker einen mittleren Abstand voneinander haben, der größer als ein durch die Auflösungsgrenze der lichtmikroskopischen Abbildung vorbestimmte Minimalabstand ist, ein Einzelbild der Probenstruktur aufgenommen wird. Die aufgenommenen Einzelbilder werden dann zu einem Gesamtbild zusammengefügt. Dabei erfolgt eine Regelung der Aufnahme der Einzelbilder, indem zumindest ein Teil oder eine Gruppe der Einzelbilder ausgewertet wird und mindestens eine Stellgröße der Einzelbildaufnahme für folgende Einzelbildaufnahmen modifiziert wird. Bei der Regelung wird eine Gütefunktion ausgewertet und deren Wert maximiert, wobei die Gütefunktion so gewählt wird, dass sie direkt oder indirekt ein Maß für den Anteil der aktivierten Markierungsmoleküle in der Probenstruktur ist.

Aufgabe der Erfindung ist es, das Verfahren zur lichtmikroskopischen Abbildung einer Probenstruktur nach dem Oberbegriff des Anspruchs 1 so weiterzubilden, dass einfach und präzise bestimmt werden kann, ob der vorbestimmte Aktivierungszustand, in dem die Marker einen ausreichend großen mittleren Abstand voneinander haben, vorliegt oder nicht.

Die Erfindung löst diese Aufgabe gemäß kennzeichnendem Teil des Anspruchs 1 dadurch, dass das Vorliegen des vorbestimmten Aktivierungszustands geprüft wird, indem in einem zeitlichen Abstand mindestens zwei Prüfeinzelbilder erzeugt werden, zumindest für einen Teil der Sensorelemente jeweils die Änderung des Bildsignals zwischen den beiden Prüfeinzelbildern erfasst wird, und das Vorliegen des vorbestimmten Aktivierungszustands festgestellt wird, wenn die erfassten Änderungen der Bildsignale in ihrer Gesamtheit eine vorbestimmte Größe übersteigen.

Der Erfindung liegt die Erkenntnis zugrunde, dass in einem Zustand, in dem die von den Markern abgegebenen Lichtsignale räumlich voneinander getrennt erfasst werden, die zeitliche Änderung dieser Signale in ihrer Gesamtheit größer ist als in einem Fall, in dem die Lichtsignale nicht getrennt voneinander erfasst werden. In ersterem Fall ist gleichsam ein Blinken in dem Mikroskopbild zu erkennen, dass mithin typisch für das Vorliegen des gewünschten Aktivierungszustands der Marker ist. Dieses kommt dadurch zustande, dass zufallsverteilt immer wieder Marker aus ihrem hellen , d.h. lichtmikroskopisch abbildbaren Zustand in ihren dunklen Zustand wechseln (z.B. durch Fotobleichen) und andere Marker aus ihrem dunklen Zustand in ihren hellen Zustand wechseln, in dem sie wiederum eine gewisse Zahl an Photonen aussenden, bevor sie wieder in den dunklen Zustand übergehen.

Die Erfindung nutzt das vorstehend genannte Phänomen, um zu prüfen, ob der vorbestimmte Aktivierungszustand vorliegt oder nicht. Dies erfolgt dadurch, dass in einem zeitlichen Abstand mindestens zwei Prüfeinzelbilder aufgenommen werden und die Änderung der von den Sensorelementen erzeugten Bildsignale als ein Maß dafür bestimmt wird, wie stark das vorstehend erläuterte Blinken ausgeprägt ist. Ist die räumliche Dichte der Marker im hellen Zustand so groß, dass sich die von den einzelnen Marker abgegebenen Lichtsignale räumlich überlagern, so ist das Blinkverhalten weniger stark ausgeprägt. Das Blinkverhalten ist in dem Mikroskopbild umso schwächer, je mehr Marker ihr Lichtsignal auf ein und dasselbe Sensorelement abgeben. In diesem Fall findet nämlich eine zeitliche Mittelung der von dem einzelnen Sensorelement empfangenen Lichtsignale statt.

Die Erfindung sieht also vor, an Hand der Veränderung zwischen den beiden in einem zeitlichen Abstand aufgenommenen Prüfeinzelbilder ein Maß für die Blinkaktivität zu erfassen und an Hand dessen zu entscheiden, wann mit der eigentlichen Abbildung der Probenstruktur begonnen werden kann.

Vorzugsweise wird an Hand der erfassten Änderungen der Bildsignale eine zeitliche Korrelation der einander entsprechenden Bildsignale der beiden Prüfeinzelbilder bestimmt und das Vorliegen des vorbestimmten Aktivierungszustands festgestellt, wenn die zeitliche Korrelation einen vorbestimmten Korrelationsschwellwert unterschreitet. Die zeitliche Korrelation zweier aufeinander folgender Einzelbilder ist eine geeignete Messgröße, um die Blinkaktivität und damit das Vorliegen des gewünschten Aktivierungszustands zu bestimmen. So ist die Blinkaktivität umso höher, je geringer die zeitliche Korrelation zwischen den beiden Prüfeinzelbildern ist.

In einer vorteilhaften Weiterbildung des erfindungsgemäßen Verfahrens ist vorgesehen, den erfassten Bildsignalen der beiden Prüfeinzelbilder jeweils einen ersten Wert zuzuordnen, wenn die erfassten Bildsignale in einem ersten Wertebereich liegen, und den erfassten Bildsignalen der beiden Prüfeinzelbilder jeweils einen von dem ersten Wert verschieden zweiten Wert zuzuordnen, wenn die erfassten Bildsignale in einem zu dem ersten Wertebereich komplementären zweiten Wertebereich liegen. Beispielsweise kann Bildsignalen, die kleiner als ein vorbestimmter Schwellwert sind, der Wert 0 zugeordnet werden, während Bildsignalen, die gleich oder größer als dieser Schwellwert sind, der Wert 1 zugeordnet wird. Aus den beiden Prüfeinzelbildern werden somit Datensätze abgeleitet, die jeweils nur die Werte 1 und 0 enthalten, und deshalb besonders gut geeignet sind, beispielsweise durch Bestimmung der zeitlichen Korrelation die Blinkaktivität zu erfassen.

Der zeitliche Abstand, in dem die beiden Prüfeinzelbilder erzeugt werden, wird vorzugsweise so eingestellt, dass er etwa gleich dem 1- bis 3-fachen der mittleren Verweildauer der Marker im lichtmikroskopisch abbildbaren Zustand ist. Solange sich der zeitliche Abstand in diesem Bereich bewegt, ist sichergestellt, dass bei Vorliegen des vorbestimmten Aktivierungszustands eine ausreichend hohe und damit an Hand der beiden Prüfeinzelbilder erfassbare Blinkaktivität vorhanden ist.

Vorzugsweise wird unter der Voraussetzung, dass der vorbestimmte Aktivierungszustand vorliegt, der Aktivierungszustand unter Verringerung des zeitlichen Abstands, in dem die beiden Prüfeinzelbilder erzeugt werden, wiederholt geprüft, bis die erfassten Änderungen der Bildsignale in ihrer Gesamtheit die vorbestimmte Größe nicht mehr übersteigen, und es wird die Belichtungszeit der Sensorelemente unter Berücksichtigung des zeitlichen Abstands, bei dem die erfassten Änderungen der Bildsignale in ihrer Gesamtheit die vorbestimmte Größe nicht mehr übersteigen, eingestellt. Diese bevorzugte Ausgestaltung des Verfahrens sieht also vor, ausgehend von dem gewünschten Aktivierungszustand den zeitlichen Abstand, in dem die beiden Prüfeinzelbilder erzeugt werden, sukzessive zu verkürzen, bis der Aktivierungszustand nicht mehr vorliegt. Durch diese Vorgehensweise ist es möglich, eine besonders günstige Belichtungszeit herauszufinden, nämlich eine Zeit, die so kurz wie möglich, jedoch so lang wie nötig ist, um einen vorhanden Aktivierungszustand zuverlässig zu erfassen.

In der Regel wird, wie eingangs beschrieben, eine Bildsequenz aus einer Vielzahl von Einzelbildern aufgenommen, um die Probenstruktur abzubilden. In diesem Fall wird der erfindungsgemäße Prüfschritt vor Aufnahme jedes Einzelbildes durchgeführt, d.h. es wird vor Aufnahme jedes Einzelbildes das Vorliegen des vorbestimmten Aktivierungszustands geprüft. Hierbei ist es ferner von Vorteil, die während eines Prüfschritts aufgenommenen Prüfeinzelbilder (gegebenenfalls in modifizierter Form) als Einzelbilder der Bildsequenz heranzuziehen, sofern in diesem Prüfschritt das Vorliegen des vorbestimmten Aktivierungszustands festgestellt worden ist. Auch ist es möglich, nur eines der Prüfeinzelbilder als Einzelbild der Bildsequenz zu nutzen.

Die Erfindung sieht ferner eine Einrichtung zur lichtmikroskopischen Abbildung einer Probenstruktur mit den im Anspruch 10 angegebenen Merkmalen vor.

Die Erfindung wird im Folgenden an Hand der Figuren näher erläutert. Darin zeigen:

Figur 1     eine Sequenz von Rohdaten-Einzelbildern sowie ein daraus zusammengesetztes Gesamtbild vor und nach der Schwerpunktbestimmung;

Figur 2     eine schematische Darstellung der in Figur 1 gezeigten Bildsequenz vor und nach der Schwerpunktbestimmung;

Figur 3     den Aufbau eines Lichtmikroskops zur Durchführung des erfindungsgemäßen Verfahrens;

Figur 4     ein Flussdiagramm zur Erläuterung des erfindungsgemäßen Verfahrens an Hand eines Ausführungsbeispiels; und

Figur 5     jeweils zwei aufeinanderfolgende Rohdaten-Einzelbilder in einem Fall, in dem der vorbestimmte Aktivierungszustand nicht vorliegt, und einem Fall, in dem der vorbestimmte Aktivierungszustand vorliegt.

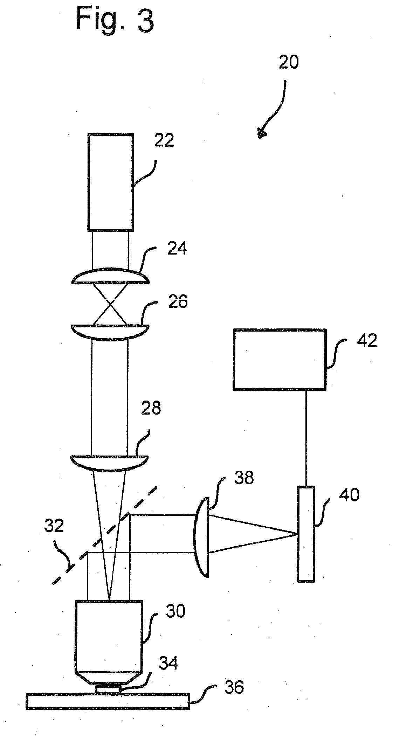

Figur 3 zeigt ein Lichtmikroskop 20 als Ausführungsbeispiel, das geeignet ist, das erfindungsgemäße Verfahren zur lichtmikroskopischen Abbildung einer Probenstruktur durchzuführen.

Das Lichtmikroskop 20 umfasst eine Lichtquelle 22, die Anregungslicht auf ein aus zwei Linsen 24 und 26 gebildetes Linsensystem aussendet. Dieses Linsensystem dient dazu, das von der Lichtquelle 22 ausgesendete Anregungslicht in der gewünschten Weise zu kollimieren. Das kollimierte Anregungslicht fällt dann auf eine Sammellinse 28. Die Sammellinse 28 fokussiert das Anregungslicht in die Apertur des Objektivs 30. Dabei tritt das Anregungslicht zunächst durch einen dichroitischen Spiegel 32, der für das Anregungslicht durchlässig ist. Das aus dem Objekt 30 austretende Anregungslicht fällt dann auf eine Probenstruktur 34, die an einem Objektträger 36 angebracht ist.

Die Probenstruktur 34 wird, wie eingangs erläutert, mit Markern, z.B. mit Fluoreszenzmolekülen präpariert. Dabei können die eingangs genannten Verfahren angewandt werden, um jeweils einen Teil dieser Marker in den hellen, d.h. lichtmikroskopisch abbildbaren Zustand zu überführen und dadurch eine aktive Teilmenge zu erzeugen.

Das von der Probenstruktur 34 ausgesendete Licht tritt durch das Objektiv 30 und fällt auf den dichroitischen Spiegel 32. Der dichroitische Spiegel 32 ist so ausgebildet, dass er das von der Probenstruktur 34 ausgesendete Licht reflektiert und so auf eine Linse 38 richtet, die das Licht auf einen räumlich auflösenden Lichtdetektor 40 bündelt. Der Lichtdetektor 40 ist aus einer matrixartigen Anordnung von Sensorelementen, z.B. CCD-Elementen, gebildet. Jedes dieser Sensorelemente wandelt das von ihm empfangene Licht in ein elektrisches Bildsignal um. Die Bildsignale werden dann an eine Steuereinheit 42 ausgegeben. Die Steuereinheit 42 steuert die einzelnen Mikroskopkomponenten und hat insbesondere die Funktion, die von dem Lichtdetektor 40 empfangenen Bildsignale zu verarbeiten.

Unter Verwendung des in Figur 3 gezeigten Lichtmikroskops 20 wird die Probenstruktur 34, wie eingangs unter Bezugnahme auf Figur 1 erläutert, abgebildet. Es wird also eine Sequenz von Rohdaten-Einzelbildern aufgenommen, für die jeweils eine andere aktive Teilmenge an Markern abgebildet wird. In einem Bildanalyseprozess werden dann von der Steuereinheit 42 in jedem Rohdaten-Einzelbild die Schwerpunkte der Lichtverteilungen bestimmt, die die im hellen Zustand befindlichen Marker darstellen. Die aus den Rohdaten-Einzelbildern ermittelten Schwerpunkte der Lichtverteilungen werden dann zu einem hochaufgelösten Gesamtbild zusammengefasst.

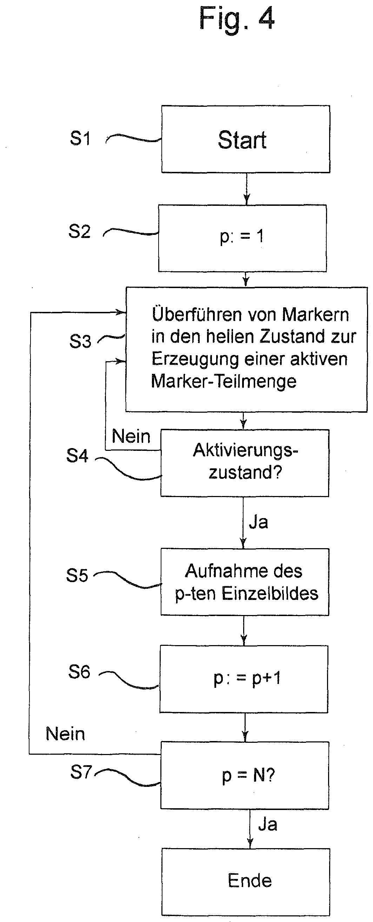

Das erfindungsgemäße Verfahren sieht nun vor, dass vor der Erzeugung des jeweiligen Rohdaten-Einzelbildes geprüft wird, ob der für die hochauflösende lichtmikroskopische Abbildung erforderliche Aktivierungszustand gegeben ist, d.h. ob die in der jeweiligen aktiven Marker-Teilmenge enthaltenen Marker einen mittleren Abstand voneinander haben, der größer als der durch die Auflösungsgrenze der lichtmikroskopischen Abbildung vorbestimmte Minimalabstand ist. Dies wird im Folgenden unter Bezugnahme auf das Flussdiagramm nach Figur 4 erläutert.

Der in Figur 4 dargestellte Prozess startet mit Schritt S1. In Schritt S2 wird eine Laufvariable $p$, mit der die Rohdaten-Einzelbilder durchnummeriert werden, auf den Wert 1 gesetzt.

Die auf den Schritt S2 folgende, aus den Schritten S3 bis S6 gebildete Schleife dient dazu, die gewünschte Sequenz von N Einzelbildern ($p$=1, ..., $N$) zu erzeugen. So wird bei der erstmaligen Durchführung des Schrittes S3 ($p$=1) für das als erstes zu erzeugende Rohdaten-Einzelbild ein Teil der Marker in den lichtmikroskopisch abbildbaren Zustand überführt, um eine erste aktive Marker-Teilmenge zu erzeugen.

Die Erfindung sieht nun in Schritt S4 eine Prüfung vor, ob der gewünschte Aktivierungszustand gegeben ist, d.h. ob die in der ersten aktiven Marker-Teilmenge enthaltenen Marker einen mittleren Abstand voneinander haben, der größer ist als der durch die Auflösungsgrenze der lichtmikroskopischen Abbildung vorbestimmte Minimalabstand. Diese erfindungsgemäße Prüfung wird später noch im Einzelnen erläutert. Ergibt die Prüfung in Schritt S4, dass der vorbestimmte Aktivierungszustand gegeben ist, so fährt der Prozess nach Figur 4 mit Schritt S5 fort, in dem das p-te Rohdaten-Einzelbild erzeugt wird. Anschließend wird in Schritt S6 die Laufvariable p um den Wert 1 erhöht. Ergibt sich dagegen in Schritt S4, dass der vorbestimmte Aktivierungszustand noch nicht vorliegt, so springt der Prozess zurück zu Schritt S3, in dem ein erneuter Versuch unternommen wird, die Marker mit der gewünschten räumlichen Dichte in ihren lichtmikroskopisch abbildbaren Zustand zu überführen, um so den gewünschten Aktivierungszustand herzustellen. Die aus den Schritten S3 und S4 gebildete Schleife wird so lange durchlaufen, bis die Prüfung in Schritt S4 ergibt, dass der vorbestimmte Aktivierungszustand vorliegt.

In Schritt S7 wird jeweils geprüft, ob die Laufvariable $p$ die Gesamtzahl $N$ an Einzelbildern schon erreicht hat. Ist dies nicht der Fall, so springt der Prozess zu Schritt S3 zurück. Sobald die Laufvariable $p$ den Wert $N$ erreicht hat, d.h. die gewünschte Zahl $N$ an Einzelbildern erzeugt ist, endet der in Figur 4 gezeigte Prozess.

Wie eingangs erläutert, müssen in den Rohdaten-Einzelbildern die Schwerpunkte bestimmt werden, um das Gesamtbild mit der gewünschten hohen Auflösung zu erhalten. Die Schwerpunkte können in dem vorliegenden Ausführungsbeispiel schon in Schritt S4 oder aber erst nach Beendigung des in Figur 4 dargestellten Prozesses bestimmt werden.

Im Folgenden wird die in Schritt S3 durchgeführte Prüfung des Aktivierungszustands näher erläutert.

Zur Prüfung des Aktivierungszustands in Schritt S3 werden zunächst zwei Prüfeinzelbilder in Form von zwei Rohdaten-Einzelbildern in einem zeitlichen Abstand voneinander aufgenommen. In dem vorliegenden Ausführungsbeispiel ist dieser zeitliche Abstand durch die Belichtungszeit gegeben, die der Lichtdetektor 40 zur Erzeugung der Bildsignale benötigt. Dies bedeutet, dass der Lichtdetektor 40 nach Erzeugung des ersten Rohdaten-Einzelbildes unmittelbar mit der Erzeugung des zweiten Rohdaten-Einzelbildes beginnt. An Hand dieser beiden Prüfeinzelbilder wird dann die Blinkaktivität erfasst, um festzustellen, ob der gewünschte Aktivierungszustand vorliegt oder nicht.

Die Blinkaktivität wird in dem vorliegenden Ausführungsbeispiel dadurch erfasst, dass die zeitliche Korrelation der beiden Prüfeinzelbilder bestimmt wird. Dies geschieht beispielsweise nach der folgenden Beziehung:

$$k = \frac{\sum\limits_{i,j} r_{ij}\widetilde{r}_{ij}}{\sum\limits_{i,j} r_{ij}^2} \approx \frac{\sum\limits_{i,j} r_{ij}\widetilde{r}_{ij}}{\sum\limits_{i,j} \widetilde{r}_{ij}^2}$$

in dieser Beziehung bezeichnet $k$ einen Korrelationsparameter, $r_{ij}$ für das zuerst aufgenommene der beiden Prüfeinzelbilder einen Signalwert des Bildsignals desjenigen Sensorelementes, der sich in der matrixartigen Anordnung der Sensorelemente, die den Lichtdetektor 40 bildet, in der $i$-ten Zeile und der $j$-ten Spalte befindet, wobei $i=1,2,..., n$ und $j=1,2,..., m$ gilt und $n$ die Gesamtzahl an Zeilen und $m$ die Gesamtzahl an Spalten angibt. Entsprechend bezeichnet $\widetilde{r}_{ij}$ für das später aufgenommene der beiden Prüfeinzelbilder einen Signalwert des Bildsignals des in der $i$-ten Zeile und der $j$-ten Spalte angeordneten Sensorelementes.

Die vorstehend angegebene Beziehung drückt aus, dass für jedes Sensorelement die Signalwerte der beiden Prüfeinzelbilder miteinander multipliziert und dann dieses Produkt über alle Sensorelemente summiert wird. Die so erhaltene Summe wird normiert, indem sie durch die Summe der Quadrate der Signalwerte eines der beiden Prüfeinzelbilder dividiert wird. Der so ermittelte Korrelationsparameter $k$ nimmt dann einen Wert zwischen 0 und 1 an, d.h. $0 \leq k \leq 1$. Ist der Wert $k$ nahe an dem Wert 0, so ist die zeitliche Korrelation zwischen den beiden Prüfeinzelbildern gering, d.h. es treten zwischen den beiden Prüfeinzelbildern deutliche Veränderungen auf. Dies wiederum bedeutet, dass die Blinkaktivität hoch ist und somit der gewünschte Aktivierungszustand vorliegt.

Ist dagegen der Korretationsparameter $k$ nahe dem Wert 1, so ist die zeitliche Korrelation groß, und es treten zwischen den beiden Prüfeinzelbildern nur geringe Veränderungen auf. Dies bedeutet wiederum, dass die Blinkaktivität gering ist. In diesem Fall ist die räumliche Dichte der Marker, die sich in dem lichtmikroskopisch abbildbaren Zustand befinden, noch zu hoch und muss weiter reduziert werden, um die gewünschte Lokalisierungspräzision zu erzielen.

Um die Entscheidung zu treffen, ob der vorbestimmte Aktivierungszustand vorliegt oder nicht, wird vorab ein Schwellwert zwischen 0 und 1 festgelegt. Ist der Korrelationsparameter $k$ kleiner als dieser Schwellwert, so wird davon ausgegangen, dass die Blinkaktivität hinreichend hoch ist und damit der vorbestimmte Aktivierungszustand vorliegt. Ist dies dagegen nicht der Fall, so sollte die räumliche Dichte der Marker im lichtmikroskopisch abbildbaren Zustand weiter verringert werden.

Im vorliegenden Ausführungsbeispiel wird der Korrelationsparameter $k$ unter Berücksichtigung sämtlicher Sensorelemente erfasst. Es ist jedoch ebenso möglich, zur Bestimmung des Korrelationsparameters $k$ nur einen Teil der Sensorelemente heranzuziehen.

Die vorstehend angegebene Beziehung zur Bestimmung des Korrelationsparameters $k$ geht davon aus, dass ein Sensorelement, das kein Licht empfängt, ein Bildsignal mit dem Wert 0 ausgibt. Sollte jedoch ein Hintergrundrauschen vorhanden sein, d.h. sollte das jeweilige Sensorelement in diesem Fall ein Bildsignal mit einem Wert größer als 0 ausgeben, so kann dies in der oben angegebenen Formel dadurch berücksichtigt werden, dass das gemittelte Hintergrundrauschen in Abzug gebracht wird.

Auch ist es möglich, den Signalwerten $r_{ij}$ und $\widetilde{r}_{ij}$ jeweils entweder den Wert 1 oder den Wert 0 zuzuordnen, abhängig davon, ob diese größer als ein vorgegebener Schwellwert sind oder nicht. Durch diese Maßnahme erhält man aus den beiden Prüfeinzelbildern jeweils Datensätze, die nur die Werte 0 und 1 aufweisen, was die Bestimmung des Korrelationsparameters k erleichtert.

Der Schwellwert, mit dem der ermittelte Korrelationsparameter k zu vergleichen ist, wird vorzugsweise in Abhängigkeit einer im Einzelfall zu definierenden Fehlertoleranz festgelegt. Unter "Fehler" ist dabei die Erfassung einer Lichtverteilung gemeint, die nicht von einem einzelnen Marker, sondern von mehreren Markern stammt, deren Abstand voneinander kleiner als der durch die Auflösungsgrenze der lichtmikroskopischen Abbildung vorbestimmte Minimalabstand ist.

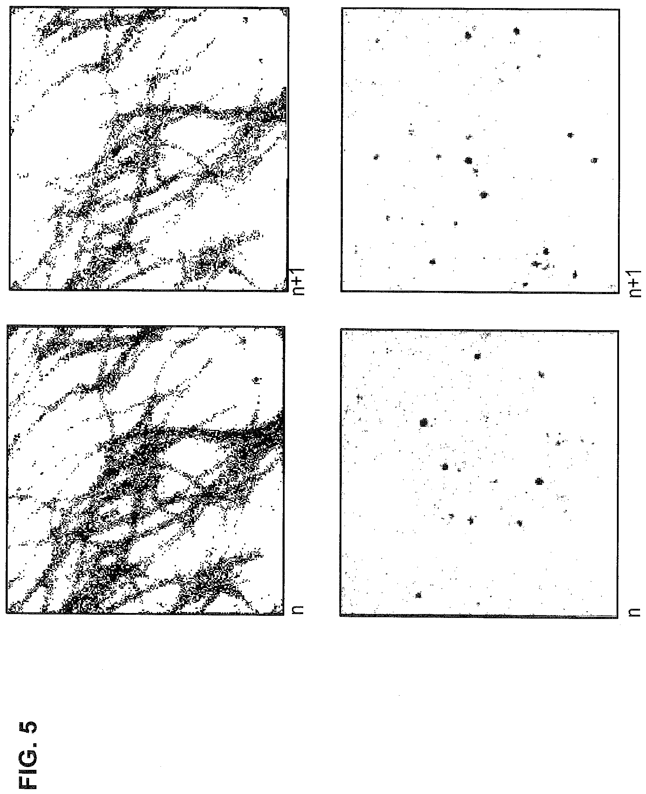

In Figur 5 sind praktische Beispiele gezeigt, die den Einfluss der Markerdichte auf die Rohdaten-Einzelbilder veranschaulichen. In diesen Beispielen wurden Mikrotubuli von PtK2-Zellen unter Färbung mit Rh6G lichtmikroskopisch abgebildet. Es sind jeweils zwei aufeinanderfolgende Rohdaten-Einzelbilder dargestellt.

In den beiden oberen Rohdaten-Einzelbildern der Figur 5 ist die Dichte an Markern im lichtmikroskopisch abbildbaren Zustand zu hoch, d.h. der gewünschte Aktivierungszustand liegt nicht vor. Die beiden nacheinander aufgenommenen Rohdaten-Einzelbilder unterscheiden sich demnach nur wenig voneinander.

Dagegen ist bei den beiden unteren Rohdaten-Einzelbildern der Figur 5 die Dichte an Markern im lichtmikroskopisch abbildbaren Zustand so gering, dass der gewünschte Aktivierungszustand vorliegt. Wie ein Vergleich der beiden nacheinander aufgenommenen Rohdaten-Einzelbilder zeigt, können in diesem Aktivierungszustand einzelne Marker detektiert werden. Außerdem wird deutlich, dass Marker, die in einem der beiden Rohdaten-Einzelbilder Lichtsignale emittieren, in dem anderen Rohdaten-Einzelbild zumeist nicht detektierbar sind (und umgekehrt). Dies bedeutet, dass bei Aufnahme dieser Rohdaten-Einzelbilder die Blinkaktivität hoch ist.

**Patentansprüche**

1. Verfahren zur lichtmikroskopischen Abbildung einer Probenstruktur (34), bei dem:

   die Probenstruktur (34) mit Markern präpariert wird, die in einen lichtmikroskopisch abbildbaren Zustand überführbar sind,
   eine aktive Marker-Teilmenge erzeugt wird, indem ein Teil der Marker in den lichtmikroskopisch abbildbaren Zustand überführt wird,
   bei Vorliegen eines vorbestimmten Aktivierungszustands, in dem die in der aktiven Marker-Teilmenge enthaltenen Marker einen mittleren Abstand voneinander haben, der größer als ein durch die Auflösungsgrenze der lichtmikroskopischen Abbildung vorbestimmter Minimalabstand ist, die Probenstruktur (34) auf eine Anordnung (40) von Sensorelementen abgebildet wird, die jeweils ein Bildsignal erzeugen, wobei diese Bildsignale in ihrer Gesamtheit ein Einzelbild der Probenstruktur (34) ergeben, und
   das Vorliegen des vorbestimmten Aktivierungszustands geprüft wird,
   **dadurch gekennzeichnet, dass** das Vorliegen des vorbestimmten Aktivierungszustands geprüft wird, indem in einem zeitlichen Abstand mindestens zwei Prüfeinzelbilder erzeugt werden, zumindest für einen Teil der Sensorelemente jeweils die Änderung des Bildsignals zwischen den beiden Prüfeinzelbildern erfasst wird, und das Vorliegen des vorbestimmten Aktivierungszustands festgestellt wird, wenn die erfassten Änderungen der Bildsignale in ihrer Gesamtheit eine vorbestimmte Größe übersteigen.

2. Verfahren nach Anspruch 1, **dadurch gekennzeichnet, dass** an Hand der erfassten Änderungen der Bildsignale eine zeitliche Korrelation der einander entsprechenden Bildsignale der beiden Prüfeinzelbilder bestimmt wird und das Vorliegen des vorbestimmten Aktivierungszustands festgestellt wird, wenn die zeitliche Korrelation einen vorbestimmten Korrelationsschwellwert unterschreitet.

3. Verfahren nach Anspruch 2, **dadurch gekennzeichnet, dass** die zeitliche Korrelation nach folgender Beziehung bestimmt wird:

$$k = \frac{\sum\limits_{i,j} r_{ij} \tilde{r}_{ij}}{\sum\limits_{i,j} r_{ij}^2} \approx \frac{\sum\limits_{i,j} r_{ij} \tilde{r}_{ij}}{\sum\limits_{i,j} \tilde{r}_{ij}^2}$$

worin

   $k$ einen Korrelationsparameter bezeichnet,
   $r_{ij}$ für das zuerst aufgenommene der beiden Prüfeinzelbilder einen Signalwert des Bildsignals desjenigen Sensorelementes bezeichnet, der sich in einer matrixartigen Sensorelement-Anordnung (40) mit $n$ Zeilen und $m$ Spalten in der $i$-ten Zeile und der $j$-ten Spalte befindet, wobei $i$=1, 2, ..., $n$ und $j$=1,2, ..., $m$ gilt, und
   $\tilde{r}_{ij}$ für das später aufgenommene der beiden Prüfeinzelbilder einen Signalwert des Bildsignals des in der $i$-ten Zeile und der $j$-ten Spalte angeordneten Sensorelementes bezeichnet.

4. Verfahren nach einem der vorhergehenden Ansprüche, **dadurch gekennzeichnet, dass** den erfassten Bildsignalen der beiden Prüfeinzelbilder jeweils ein erster Wert zugeordnet wird, wenn die erfassten Bildsignale in einem ersten Wertebereich liegen, und dass den erfassten Bildsignalen der beiden Prüfeinzelbilder jeweils ein von dem ersten Wert verschiedener zweiter Wert zugeordnet wird, wenn die erfassten Bildsignale in einem zu dem ersten Wertebereich komplementären zweiten Wertebereich liegen.

5. Verfahren nach einem der vorhergehenden Ansprüche, **dadurch gekennzeichnet, dass** der zeitliche Abstand, in dem die beiden Prüfeinzelbilder erzeugt werden, so eingestellt wird, dass er etwa gleich dem 1- bis 3-fachen der mittleren Verweildauer der Marker im lichtmikroskopisch abbildbaren Zustand ist.

6. Verfahren nach Anspruch 5, **dadurch gekennzeichnet, dass** die Belichtungszeit der Sensorelemente so eingestellt wird, dass sie etwa gleich der mittleren Verweildauer der Marker im lichtmikroskopisch abbildbaren Zustand ist.

7. Verfahren nach einem der vorhergehenden Ansprüche, **dadurch gekennzeichnet, dass** unter der Voraussetzung, dass der vorbestimmte Aktivierungszustands vorliegt, der Aktivierungszustand unter Verringerung des zeitlichen Abstands, in dem die beiden Prüfeinzelbilder erzeugt werden, wiederholt geprüft wird, bis die erfassten Änderungen der Bildsignale in ihrer Gesamtheit die vorbestimmte Größe nicht mehr übersteigen, und dass die Belichtungszeit der Sensorelemente unter Berücksichtigung des zeitlichen Abstands, bei dem die erfassten Änderungen der Bildsignale in ihrer Gesamtheit die vorbestimmte Größe nicht mehr übersteigen, eingestellt wird.

8. Verfahren nach einem der vorhergehenden Ansprüche, **dadurch gekennzeichnet, dass** eine Bildsequenz von Einzelbildern aufgenommen und vor Aufnahme jedes Einzelbildes das Vorliegen des vorbestimmten Aktivierungszustands geprüft wird.

9. Verfahren nach Anspruch 8, **dadurch gekennzeichnet, dass** mindestens eines der beiden Prüfeinzelbilder als Einzelbild der Bildsequenz herangezogen wird, wenn das Vorliegen des vorbestimmten Aktivierungszustands festgestellt worden ist.

10. Einrichtung zur lichtmikroskopischen Abbildung einer Probenstruktur, mit einem Mittel, das angepasst ist, die Probenstruktur mit Markern zu präparieren, die in einen lichtmikroskopisch abbildbaren Zustand überführbar sind,
einem Mittel, das angepasst ist, eine aktive Marker-Teilmenge zu erzeugen, indem es einen Teil der Marker in den lichtmikroskopisch abbildbaren Zustand überführt,
einem Mittel, das angepasst ist, bei Vorliegen eines vorbestimmten Aktivierungszustands, in dem die in der aktiven Marker-Teilmenge enthaltenen Marker einen mittleren Abstand voneinander haben, der größer als ein durch die Auflösungsgrenze der lichtmikroskopischen Abbildung vorbestimmter Minimalabstand ist, die Probenstruktur auf eine Anordnung von Sensorelementen abzubilden, die jeweils ein Bildsignal erzeugen, wobei diese Bildsignale in ihrer Gesamtheit ein Einzelbild der Probenstruktur ergeben, und
einem Mittel, das angepasst ist, das Vorliegen des vorbestimmten Aktivierungszustands zu prüfen,
**dadurch gekennzeichnet, dass** dieses Mittel angepasst ist, das Vorliegen des vorbestimmten Aktivierungszustands zu prüfen, indem in einem zeitlichen Abstand mindestens zwei Prüfeinzelbilder erzeugt werden, zumindest für einen Teil der Sensorelemente jeweils die Änderung des Bildsignals zwischen den beiden Prüfeinzelbildern erfasst wird, und das Vorliegen des vorbestimmten Aktivierungszustands festgestellt wird, wenn die erfassten Änderungen der Bildsignale in ihrer Gesamtheit eine vorbestimmte Größe übersteigen.

**Claims**

1. Method for light microscopic imaging of a sample structure (34), wherein:

- the sample structure (34) is prepared with markers that may be transferred into a state that may be imaged by light microscopy,

- an active marker subset is generated wherein a portion of the markers is transferred into a state that may be imaged by light microscopy,
- in the presence of a predetermined activation state, in which the markers contained in the active marker subset are at a mean distance from one another that is greater than a minimum distance predetermined by the resolution limit of the light microscopic imaging, and wherein the sample structure (34) is placed on an arrangement (40) of sensor elements each of which generates a frame, wherein these frames yield a single frame of the sample structure (34) in their entirety, while the presence of the predetermined activation state is checked,

**characterized in that** the presence of the predetermined activation state is checked by generating at least two check frames separated by a time interval, wherein the change of the image signal between the two check frames is detected for at least one portion of the sensor elements, and the presence of the predetermined activation state is detected when the detected changes of the image signals exceed a predetermined magnitude in their entirety.

2. Method according to claim 1, **characterized in that** a temporal correlation of the corresponding image signals of the two check frames is determined on the basis of the detected changes in the image signals, and the presence of the predetermined activation state is determined when the temporal correlation falls below a predetermined correlation threshold.

3. Method according to claim 2, **characterized in that** the temporal correlation is determined according to the following relationship: in which:

$$k = \frac{\sum\limits_{i,j} r_{ij} \tilde{r}_{ij}}{\sum\limits_{i,j} r_{ij}^2} \approx \frac{\sum\limits_{i,j} r_{ij} \tilde{r}_{ij}}{\sum\limits_{i,j} \tilde{r}_{ij}^2}$$

- $k$ denotes a correlation parameter,
- $r_{ij}$ denotes for the first recorded of the two check frames, a signal value of the image signal of that sensor element that is located in a matrix-type sensor element arrangement (40) with $n$ rows and $m$ columns in the $i$-th row and the $j$-th column, where $i$=1, 2, ..., n and $j$=l, 2, ..., m, and
- $\tilde{r}_{ij}$ denotes for the later recorded of the two check frames, a signal value of the image signal of the sensor elements arranged in the; $i$-th row and the $j$-th column.

4. Method according to any one of the preceding claims, **characterized in that** the detected image signals of the two check frames are each respectively assigned a first value when the detected image signals are in a first range of values, and that the detected image signals of the two check frames are each assigned a second value that is different from the first value when the detected image signals are in a second value range that is complementary to the first value range.

5. Method according to any one of the preceding claims, **characterized in that** the time interval between which the two check frames are generated, is so set that it is approximately equal to 1 to 3 times the average residence time of the marker in the light microscopic imaging state.

6. Method according to claim 5, **characterized in that** the exposure time of the sensor elements is so set that it is approximately equal to the average residence time of the marker in the light microscopic imaging state.

7. Method according to one of the preceding claims, **characterized in that**, provided that the predetermined activation state is present, the activation state is repeatedly checked while reducing the time interval between which the two check frames are generated, until the detected changes of the image signals in their entirety do not exceed the predetermined magnitude, and that the exposure time of the sensor elements is adjusted while taking into account the time interval at which the detected changes of the image signals in their entirety no longer exceed the predetermined magnitude.

8. Method according to any one of the preceding claims, **characterized in that** an image sequence of frames is taken and the presence of the predetermined activation state is checked before taking each frame.

9. Method according to claim 8, **characterized in that** at least one of the check frames is used as a frame of the image sequence when the presence of the predetermined activation state has been determined.

10. Device for light microscopic imaging of a sample structure, comprising:

   - a means designed to prepare the sample structure with markers which may be transferred into a state which may be imaged in the light microscope,
   - a means designed to generate an active marker subset by transferring a portion of the markers into the state which may be imaged in the light microscope,

   - a means designed to image the sample structure on an arrangement of sensor elements each of which generates an image signal, these image signals giving a single image of the sample structure in their entirety, in the presence of a predetermined activation state in which the markers contained in the active marker subset have a mean distance from each other that is greater than a predetermined minimum distance that is predetermined by the resolution limit of the light microscopic imaging, and
   - a means designed to check the presence of the predetermined activation state,

**characterized in that** this means is designed to check the presence of the predetermined activation state by generating at least two check frames at a time interval, by detecting the change of the image signal between the two check frames for at least a portion of the sensor elements, and by detecting the presence of the predetermined activation state when the detected changes of the image signals in their entirety exceed a predetermined magnitude.

**Revendications**

1. Procédé de représentation microscopique optique d'une structure d'échantillon (34), dans lequel :

   la structure de l'échantillon (34) est préparée avec des marqueurs qui peuvent être mis dans un état pouvant être représenté de manière microscopique optique,
   une quantité partielle de marqueurs actifs est produite, en mettant une partie des marqueurs dans l'état pouvant être représenté de manière microscopique optique,
   lors de l'existence d'un état d'activation prédéterminé, dans lequel les marqueurs contenus dans la quantité partielle de marqueurs actifs présentent entre eux une distance moyenne qui est supérieure à une distance minimale prédéterminée par la limite de résolution de la représentation microscopique optique, la structure de l'échantillon (34) est représentée sur une disposition (40) d'éléments de capteurs, qui génèrent chacun un signal d'image, ces signaux d'images produisant dans leur intégralité une image unique de la structure d'échantillon (34) et
   l'existence de l'état d'activation prédéterminé est vérifiée,
   **caractérisé en ce que** l'existence de l'état d'activation prédéterminé est vérifiée en générant, à des intervalles de temps prédéterminés, au moins deux images uniques de vérification, la modification du signal d'image entre les deux images uniques de vérification est mesurée au moins pour une partie des éléments de capteurs et l'existence de l'état d'activation prédéterminé est constatée si les modifications mesurées des signaux d'image dépassent, dans leur intégralité, une taille prédéterminée.

2. Procédé selon la revendication 1, **caractérisé en ce que**, à l'aide des modifications mesurées des signaux d'images, une corrélation temporelle des signaux d'images correspondant entre eux des deux images uniques de vérification est déterminée et l'existence de l'état d'activation prédéterminé est constaté si la corrélation temporelle passe en dessous d'une valeur seuil de corrélation prédéterminée.

3. Procédé selon la revendication 2, **caractérisé en ce que** la corrélation temporelle est déterminée selon la relation suivante :

$$k = \frac{\sum\limits_{i,j} r_{ij} \tilde{r}_{ij}}{\sum\limits_{i,j} r_{ij}^2} \approx \frac{\sum\limits_{i,j} r_{ij} \tilde{r}_{ij}}{\sum\limits_{i,j} \tilde{r}_{ij}^2}$$

dans laquelle

k désigne un paramètre de corrélation,
$r_{ij}$ désigne, pour l'une des deux images uniques de vérification prise d'abord, une valeur du signal d'image de l'élément de capteur qui se trouve dans une disposition d'éléments de capteurs matricielle (40) avec n lignes et m colonnes dans la $i^{ème}$ ligne et la $j^{ème}$ colonne, i = 1, 2, ... n et j = 1, 2, ... m et
$\tilde{r}_{ij}$ désigne, pour l'une des deux images uniques de vérification prise ensuite, une valeur du signal d'image de l'élément de capteur disposé dans la $i^{ème}$ ligne et la $j^{ème}$ colonne.

4. Procédé selon l'une des revendications précédentes, **caractérisé en ce que**, aux signaux d'images mesurés des deux images uniques de vérification, correspond une première valeur si les signaux d'images mesurés se trouvent dans une première plage de valeurs, et **en ce que**, aux signaux d'images mesurés des deux images uniques de vérification, correspond une deuxième valeur différente de la première valeur, si les signaux d'images mesurés se trouvent dans une deuxième plage de valeurs complémentaire de la première plage de valeurs.

5. Procédé selon l'une des revendications précédentes, **caractérisé en ce que** l'intervalle de temps auquel les deux images uniques de vérification sont générées est réglé de façon à représenter environ 1 à 3 fois la durée moyenne de séjour des marqueurs dans l'état pouvant être représenté de manière microscopique optique.

6. Procédé selon la revendication 5, **caractérisé en ce que** le temps d'éclairage des éléments de capteurs est réglé de façon à ce qu'il représente environ la durée moyenne de séjour des marqueurs dans l'état pouvant être représenté de manière microscopique optique.

7. Procédé selon l'une des revendications précédentes, **caractérisé en ce que**, dans la condition où l'état d'activation prédéterminé existe, l'état d'activation, est vérifié de manière répétitive en réduisant l'intervalle de temps auquel les deux images uniques de vérification sont générées, jusqu'à ce que les modifications mesurées des signaux d'images ne dépassent plus, dans leur intégralité, la taille prédéterminée et **en ce que** le temps d'éclairage des éléments de capteurs est réglé en tenant compte de l'intervalle de temps auquel les modifications mesurées des signaux d'images ne dépassent plus, dans leur intégralité, la taille prédéterminée.

8. Procédé selon l'une des revendications précédentes, **caractérisé en ce qu'**une séquence d'images uniques est prise et, avant la prise de chaque image unique, l'existence de l'état d'activation prédéterminé est vérifiée.

9. Procédé selon la revendication 8, **caractérisé en ce qu'**au moins une des deux images uniques de vérification est utilisée en tant qu'image unique de la séquence d'images, si l'existence de l'état d'activation prédéterminé a été constatée.

10. Dispositif de représentation microscopique optique d'une structure d'échantillon, avec un moyen qui est conçu pour préparer la structure de l'échantillon avec des marqueurs, qui peuvent être mis dans un état pouvant être représenté de manière microscopique optique,
un moyen conçu pour générer une quantité partielle de marqueurs en mettant une partie des marqueurs dans l'état pouvant être représentée de manière microscopique optique,
un moyen conçu, lors de l'existence d'un état d'activation prédéterminé, dans lequel les marqueurs contenus dans la quantité partielle de marqueurs actifs présentent une distance moyenne entre eux, qui est supérieure à une distance minimale prédéterminée par la limite de résolution de la représentation microscopique optique, pour représenter la structure de l'échantillon sur une disposition d'éléments de capteurs, qui génèrent chacun un signal d'image, ces signaux d'images produisant, dans leur intégralité, une image unique de la structure de l'échantillon et
un moyen conçu pour vérifier l'existence de l'état d'activation prédéterminé,

**caractérisé en ce que** ce moyen est conçu pour vérifier l'existence de l'état d'activation prédéterminé, en générant, à un intervalle de temps déterminé, au moins deux images uniques de vérification, la modification du signal d'image entre les deux images uniques de vérification est mesurée au moins pour une partie des éléments de capteurs et l'existence de l'état d'activation prédéterminé est constatée si les modifications mesurées des signaux d'images dépassent, dans leur intégralité, une taille prédéterminée.

Fig. 1

Fig. 2

$\Delta x_{Abb}$

$\Delta x_{SP}$

2

4

2

6

# Fig. 3

# Fig. 4

```
S1 ⌒          ┌─────────────────┐
              │      Start       │
              └─────────────────┘
                       │
                       ▼
S2 ⌒          ┌─────────────────┐
              │      p: = 1      │
              └─────────────────┘
                       │
                       ▼
       ┌─────────────────────────────┐
       │  Überführen von Markern     │
S3 ⌒   │  in den hellen Zustand zur  │
       │  Erzeugung einer aktiven    │
       │  Marker-Teilmenge           │
       └─────────────────────────────┘
                       │
      Nein             ▼
S4 ⌒          ┌─────────────────┐
              │  Aktivierungs-  │
              │    zustand?     │
              └─────────────────┘
                       │ Ja
                       ▼
S5 ⌒          ┌─────────────────┐
              │  Aufnahme des    │
              │  p-ten Einzelbildes │
              └─────────────────┘
                       │
                       ▼
S6 ⌒          ┌─────────────────┐
              │    p: = p+1      │
              └─────────────────┘
    Nein                │
                       ▼
S7 ⌒          ┌─────────────────┐
              │     p = N?       │
              └─────────────────┘
                       │ Ja
                       ▼
              ┌─────────────────┐
              │      Ende        │
              └─────────────────┘
```

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006127692 A2
- DE 102006021317 B3
- WO 2007128434 A1
- US 20090134342 A1
- DE 102008024568 A1
- DE 102008059328 A1

**In der Beschreibung aufgeführte Nicht-Patentliteratur**

- **M. J. RUST ; M. BATES ; X. ZHUANG.** Sub-diffraction-limit imaging by stochastic optical reconstruction microscopy (STORM). *Nature Methods,* 2006, vol. 3, 793-796
- **GEISLER C. et al.** Resolution of Lambda/10 in fluorescence microscopy using fast single molecule photo-switching. *Appl. Phys. A,* 2007, vol. 88, 223-226